# EUROPEAN PATENT APPLICATION

(11) **EP 3 772 462 A1**
(43) Date of publication of application: **10.02.2021**
(21) Application number: 20189428.4
(22) Date of filing: 04.08.2020
(51) Int. Cl.: B64D 27/24, B64D 27/02

(54) **HYBRID ELECTRIC AIRCRAFT ENERGY REGENERATION**

(30) Priority: 05.08.2019 US 201962882979 P
(71) Applicant: Hamilton Sundstrand Corporation, Charlotte, NC 28217 (US)
(72) Inventor: SPIERLING, Todd A., Rockford, IL 61109 (US); IVES, Kyle Stephen, Loves Park, IL 61111 (US)
(74) Representative: Dehns

(57) **Abstract**

A hybrid electric aircraft powerplant controller (101) for controlling an engine (103) and an electric motor-generator (105) can include an engine recharging module (107). The engine recharging module can be configured to operate the engine to produce a desired output power to a propulsor (109) and to produce additional power to drive the electric motor-generator to produce electrical output from the electric motor-generator to recharge an electrical storage device (117) during at least one power setting and/or flight phase where the electric motor-generator is not driving the propulsor.

## Description

### FIELD

This disclosure relates to hybrid electric aircraft, more specifically to energy regeneration in such aircraft.

### BACKGROUND

Certain applications of hybrid electric aircraft use electric power over only a portion of the flight envelope (e.g., during take-off and climb). In a parallel hybrid, this electrical energy can be supplied from an onboard battery, for example. The battery may be desired to contain sufficient energy for the initial take-off/climb, plus at least one reserve take-off/climb. Having a battery with sufficient capacity to contain all of this energy at the start of a flight results in a battery of significant size and weight, penalizing the overall hybrid architecture.

Such conventional methods and systems have generally been considered satisfactory for their intended purpose. However, there is still a need in the art for hybrid electric aircraft energy regeneration. The present disclosure provides a solution for this need.

### SUMMARY

A hybrid electric aircraft powerplant controller for controlling an engine and an electric motor-generator can include an engine recharging module. The engine recharging module can be configured to operate the engine to produce a desired output power to a propulsor and to produce additional power to drive the electric motor-generator to produce electrical output from the electric motor-generator to recharge an electrical storage device during at least one power setting and/or flight phase where the electric motor-generator is not driving the propulsor.

In a certain aircraft flight (e.g., normal aircraft operation), the at least one power setting can include less than a maximum engine power setting. In certain embodiments, the flight phase can include cruise or descent, for example.

The controller can include a windmilling module configured to reduce power from the engine and windmill the propulsor during descent to drive the electric motor-generator at least partially using windmilling. In certain embodiments, the windmilling module can be configured to idle the engine during descent.

A hybrid electric powerplant system can include a propulsor shaft configured to connect to a propulsor, an engine operatively connected to the propulsor shaft to drive the propulsor shaft, and an electric motor-generator operatively connected to the propulsor shaft to drive the propulsor shaft in conjunction with and/or independently of the engine. The powerplant system can include a controller for controlling the engine and the electric motor-generator, e.g., as disclosed herein (e.g., as described above). The propulsor can be a propeller (e.g., fixed pitch or controllable pitch). The powerplant system can include the propeller.

The powerplant system can include a propeller gear box connected to both the engine and the electric motor-generator, and to the propeller shaft (e.g., to provide a geared connection between each of the engine and the electric motor-generator and the propeller). The powerplant system can include the electrical storage device (e.g., a battery).

In certain embodiments, the powerplant system can include power electronics configured to operate bidirectionally to both provide power to the electric motor-generator in motor mode and to receive electric power from the electric motor-generator in generator mode. The controller can be operatively connected to the power electronics to switch the power electronics from motor mode to generator mode when driving the electric motor-generator. In certain embodiments, the power electronics can be configured to switch automatically between motor mode and generator mode.

A method can include charging an electrical storage device by powering an electric motor-generator of a hybrid electric powerplant system with an engine of the hybrid electric powerplant when there is available additional engine power above a desired power output of the engine and the electric motor-generator is not in use to drive a propulsor. Charging with the engine can include charging during cruise and/or descent. Charging with the engine can include only charging during cruise, and the method can include windmilling the propulsor on descent to charge the electrical storage device.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic diagram of a powerplant system in accordance with this disclosure, showing an energy flow due to recharging using the engine;
Fig. 2 shows charts of altitude related to power setting, and indicating possible engine recharging regions;
Fig. 3 is a schematic diagram of the powerplant system of Fig. 1, showing an energy flow due to recharging using windmilling; and
Fig. 4 shows charts of altitude related to power setting, and indicating possible windmilling recharging regions.

### DETAILED DESCRIPTION

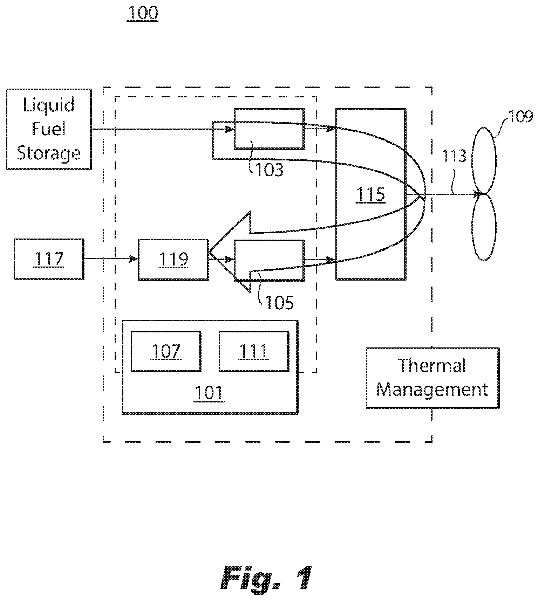

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Other embodiments and/or aspects of this disclosure are shown in Figs. 1-4.

Referring to Fig. 1, a hybrid electric aircraft powerplant controller 101 for controlling an engine 103 and an electric motor-generator 105 of a powerplant system 100 can include an engine recharging module 107. The engine recharging module 107 can be configured to operate the engine 103 to produce a desired output power (e.g., based on a throttle setting) to a propulsor 109 and to produce additional power to drive the electric motor-generator 105 to produce electrical output from the electric motor-generator 105 to recharge an electrical storage device (e.g., a battery) during at least one power setting and/or flight phase where the electric motor-generator 105 is not driving the propulsor 109.

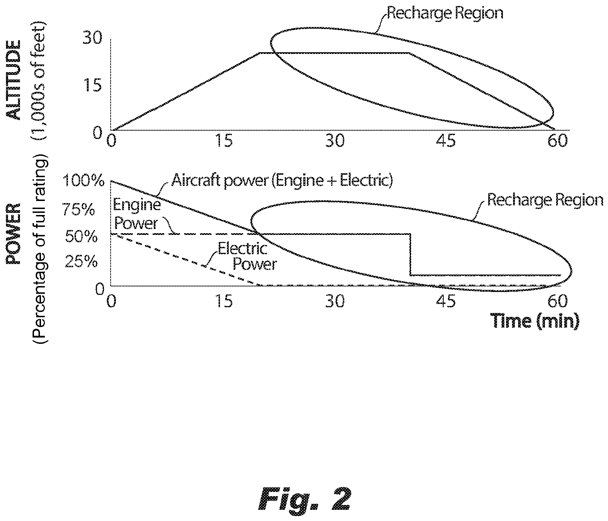

Referring additionally to Fig. 2, at least one power setting can include less than a maximum engine power setting (e.g., any setting where less than all of the power the engine 103 can produce is commanded). In certain embodiments, at least one flight phase can include cruise or descent, for example, as shown in Fig. 2. In certain embodiments, for example, the engine 103 can be sized such that a cruise power setting can require less than all of the power of the engine 103 to maintain level flight. In such a case, the controller 101 can cause the engine 103 to produce more power than commanded (e.g., by a pilot throttle setting) and the additional power can drive the electric motor-generator 105.

In certain systems, the controller 101 can be configured to disengage (e.g., electrically and/or physically) the electric motor-generator 105 when not being used as a motor (e.g., due to a power setting where electric power is not required). In certain embodiments, the controller 101 can be configured to engage (e.g., electrically and/or physically) the electric motor-generator 105 when recharging is desired if the electric motor-generator 105 is configured to selectively engage and/or disengage based on whether the electric motor-generator 105 is required to produce a commanded thrust.

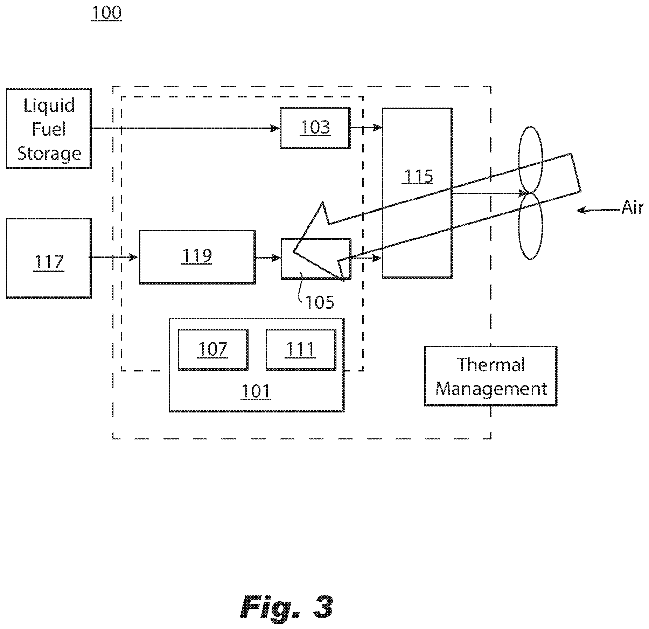

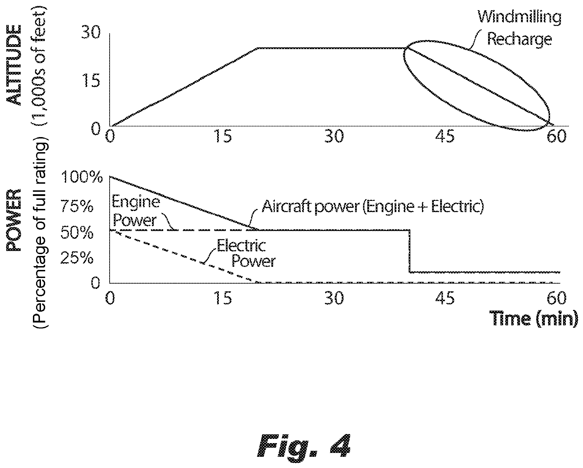

Referring additionally to Figs. 3 and 4, the controller 101 can include a windmilling module 111 configured to reduce power from the engine 103 and windmill the propulsor 109 during descent to drive the electric motor-generator 105 at least partially using windmilling. In certain embodiments, e.g., as shown in Fig. 4, the windmilling module 111 can be configured to idle the engine 103 during descent, e.g., such that charging is only a function of potential energy recovery. In certain embodiments, it is contemplated that the engine power setting can be above idle (e.g., any suitable setting to descent at a rate and airspeed as desired), and any tendency to increase a speed of the propulsor 109 (e.g., due to windmilling effect during descent in a fixed pitch propeller) can be converted to electrical energy.

Certain embodiments can control power draw from the engine 103 and/or windmilling as a function of how much power is desired for certain charge rate, and/or how much power is available. Certain embodiments can combine engine charging and windmilling modules, and the controller 101 can be configured to compare power output from electric motor-generator 105 to a power desired for charging. The controller 101 can be configured to control the engine 103 as a function of a difference in output generation and desired generation to mix windmilling and engine power output (e.g., while maintaining desired flight characteristics).

As shown, a hybrid electric powerplant system 100 can include a propulsor shaft 113 configured to connect to a propulsor 109, an engine 103 operatively connected to the propulsor shaft 113 to drive the propulsor shaft 113, and an electric motor-generator 105 operatively connected to the propulsor shaft 113 to drive the propulsor shaft 113 in conjunction with and/or independently of the engine 103. The powerplant system can include a controller 101 for controlling the engine 103 and the electric motor-generator 105, e.g., any suitable controller 101 as disclosed herein (e.g., as described above). The propulsor 109 can be a propeller (e.g., fixed pitch or controllable pitch). The powerplant system 100 can include the propeller 109, in certain embodiments.

The powerplant system 100 can include a propeller gear box 115 connected to both the engine 103 and the electric motor-generator 105, and to the propeller shaft 113 (e.g., to provide a geared connection between each of the engine 103 and the electric motor-generator 105 and the propulsor 109). The powerplant system 100 can include the electrical storage device 117 (e.g., a battery) operatively connected to the electric motor-generator 105.

In certain embodiments, the powerplant system 100 can include power electronics 119 configured to operate bidirectionally to both provide power from the electrical storage device 119 to the electric motor-generator 105 in motor mode and to receive electric power from the electric motor-generator 105 in generator mode to charge the electrical storage device 119. The controller 101 can be operatively connected to the power electronics 119 to switch the power electronics 119 from motor mode to generator mode when driving the electric motor-generator 105 to charge the electrical storage device 117. In certain embodiments, the power electronics 119 can be configured to switch automatically between motor mode and generator mode.

In accordance with at least one aspect of this disclosure, a method can include charging an electrical storage device by powering an electric motor-generator of a hybrid electric powerplant system with an engine of the hybrid electric powerplant when there is available additional engine power above a desired power output of the engine and the electric motor-generator is not in use to drive a propulsor. Charging with the engine can include charging during cruise and/or descent. Charging with the engine can include only charging during cruise, and the method can include windmilling the propulsor on descent to charge the electrical storage device.

In certain embodiments, an engine can be used exclusively in cruise and/or descent in a hybrid system. Embodiments can power both a propulsor and drive an electric motor-generator to regenerate electricity (e.g., in any scenario where less engine energy is needed than full power). Certain embodiments can reduce a battery size by about 70 kWh and reduce aircraft weight by about 1000 lbs with a minimal increase in carried fuel (e.g., about 20-25 lbs of fuel).

Certain embodiments require no additional power electronics as certain motor drives can be configured to be bidirectional. Certain embodiments need not have additional gear mechanics, clutches, or other different mechanics. Certain embodiments do not need a clutch for engaging or disengaging the electric motor-generator, e.g., where an open circuit stator produces very little horsepower, for example. Certain embodiments can recharge about 20% storage capacity in about a half an hour. For example, certain embodiments can cause an engine to generate about 150KW of additional engine output to recharge about 70KWH in about a half hour, which can be about 20% of electric storage capacity in certain embodiments. Embodiments can include an additional mode to windmill the propeller, for example. In this option, at least a portion of the reserve energy is stored as potential energy (weight and altitude) of the aircraft, and the propeller can be used to back-drive the electric motor-generator, generating electricity that is used to recharge the battery, for example.

As appreciated by those having ordinary skill in the art in view of this disclosure, certain embodiments allow hybrid aircraft to include only sufficient battery capacity for an initial take-off and climb, and to use inflight recharging to "refill" the battery for subsequent reserve take-off and climbs. Embodiments provide at least one more operational modes such as conversion of liquid fuel to battery energy and/or conversion of aircraft potential energy to battery energy. Implementation of inflight recharging can allow the batteries to be reduced in size by approximately 1/3, e.g., as described above.

As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, micro-code, etc.), or an embodiment combining software and hardware aspects, all possibilities of which can be referred to herein as a "circuit," "module," or "system." A "circuit," "module," or "system" can include one or more portions of one or more separate physical hardware and/or software components that can together perform the disclosed function of the "circuit," "module," or "system", or a "circuit," "module," or "system" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electromagnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of this disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of this disclosure may be described above with reference to flowchart illustrations and/or block diagrams of methods, apparatus (systems) and computer program products according to embodiments of this disclosure. It will be understood that each block of any flowchart illustrations and/or block diagrams, and combinations of blocks in any flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in any flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the scope of the subject disclosure as defined by the claims.

## Claims

1. A hybrid electric aircraft powerplant controller (101) for controlling an engine (103) and an electric motor-generator (105), comprising:
an engine recharging module (107) configured to operate the engine to produce a desired output power to a propulsor (109) and to produce additional power to drive the electric motor-generator (105) to produce electrical output from the electric motor-generator (105) to recharge an electrical storage device (117) during at least one power setting and/or flight phase where the electric motor-generator (105) is not driving the propulsor (109).

2. The controller of claim 1, wherein the at least one power setting includes less than a maximum engine power setting.

3. The controller of claim 1 or 2, wherein the at least one flight phase includes cruise or descent.

4. The controller of any preceding claim, further comprising a windmilling module (111) configured to reduce power from the engine (103) and windmill the propulsor during descent to drive the electric motor-generator at least partially using windmilling; and/or wherein the windmilling module (111) is configured to idle the engine (103) during descent.

5. A hybrid electric powerplant system (100), comprising:
a propulsor shaft (113) configured to connect to a propulsor (109);
an engine (103) operatively connected to the propulsor shaft to drive the propulsor shaft;
an electric motor-generator (105) operatively connected to the propulsor shaft to drive the propulsor shaft in conjunction with and/or independently of the engine; and
the controller (101) of any preceding claim for controlling the engine (103) and the electric motor-generator (105); optionally wherein the electrical energy storage device (117) is a battery.

6. The powerplant system of claim 5, wherein the propulsor (109) is a propeller.

7. The powerplant system of claim 6, further comprising the propeller.

8. The powerplant system of claim 5, 6 or 7, further comprising a propeller gear box (115) connected to both the engine and the electric motor-generator, and to the propeller shaft (113).

9. The powerplant system of any of claims 5 to 8, further comprising the electrical storage device (117).

10. The powerplant system of any of claims 5 to 9, further comprising power electronics (119) configured to operate bidirectionally to both provide power to the electric motor-generator in motor mode and to receive electric power from the electric motor-generator in generator mode.

11. The powerplant system of claim 10, wherein the controller (101) is operatively connected to the power electronics (119) to switch the power electronics from motor mode to generator mode when driving the electric motor-generator.

12. The powerplant system of claim 10, wherein the power electronics (119) are configured to switch automatically between motor mode and generator mode.

13. A method comprising:
charging an electrical storage device (117) by powering an electric motor-generator (105) of a hybrid electric powerplant system (100) with an engine (103) of the hybrid electric powerplant when there is available additional engine power above a desired power output of the engine and the electric motor-generator is not in use to drive a propulsor (109).

14. The method of claim 13, wherein charging with the engine (103) includes only charging during cruise, and the method further includes windmilling the propulsor on descent to charge the electrical storage device (117); or wherein charging with the engine includes charging during cruise and/or descent.

15. The method of claim 13 or 14, wherein the propulsor (109) is a propeller.
